# EUROPEAN PATENT SPECIFICATION

(11) **EP 1 199 411 B1**
(45) Date of publication and mention of the grant of the patent: **25.10.2006**
(21) Application number: 00940841.0
(22) Date of filing: 27.06.2000
(51) Int. Cl.: E02F 9/20, B60K 6/00, B60L 11/12, F15B 11/00, F02D 29/04, B60K 6/04

(54) **SHOVEL**
SCHAUFEL
EXCAVATRICE

(30) Priority: 29.06.1999 JP 18351699
(43) Date of publication of application: 24.04.2002
(73) Proprietor: KOBELCO CONSTRUCTION MACHINERY CO., LTD., Hiroshima-shi, Hiroshima 731-0138 (JP)
(72) Inventor: YONEZAWA, Satoshi, Kobe-Shi, Hyogo 651-2271 (JP)
(74) Representative: TBK-Patent
(86) International application number: PCT/JP2000/004190
(87) International publication number: WO 2001/000936

(56) References cited:
- EP-A- 0 913 292
- EP-A- 1 219 751
- DE-A1- 3 501 608
- DE-A1- 3 611 455
- JP-A- 8 019 116
- JP-A- 10 042 587
- JP-A- 59 028 805

## Description

### TECHNICAL FIELD

The present invention relates to an excavator as an excavating machine having an electric motor used as a driving source.

### BACKGROUND

In the past, a general excavator called a hydraulic excavator is constituted such that a lower traveling body (normally, a crawler) is equipped with an upper rotating body, and an excavating attachment provided with a boom, an arm, and a bucket is mounted on the upper rotating body, and is constituted so that a hydraulic pump is driven by an engine as a power source installed on the upper rotating body, and a discharge oil out of the pump is supplied to a hydraulic actuator (a hydraulic motor or a hydraulic cylinder) so as to carry out traveling, rotating, boom raising and lowering, arm operating, and bucket operating.

However, in the above conventional hydraulic excavator, there arises the problem that the burden on the engine is so heavy that fuel cost is poor, and of the exhaust gases and noises.

In the light of the foregoing, recently, the proposal has been made, as shown in Japanese Utility Model Application Laid-Open No. Hei 5-48501 Publication, wherein an electric motor is connected to a power line of the engine, and when the load of the pump is light, the motor causes to be operated as a generator (regenerating operation) by the surplus torque of the engine to store the produced electric power in the battery, and the motor is driven by the condensed power of the battery at the time of the heavy load to assist the engine, whereby the engine load is smoothed to cut down the exhaust gases, and reduce the fuel costs.

However, according to the above well known motor driving system, since employment is made of the constitution wherein the rotational force is transmitted in the channel of engine - motor - hydraulic pump, it is necessary to mechanically connect these three devices to install them as a single power unit at one concentrated place.

This results in the following disadvantages:
(1) The power unit becomes large, and a large space therefor is required in the installed portion (the upper rotating body), which obstructs an arrangement of equipment, and is unsuitable particularly for the small rotating type excavator which is becoming the mainstream recently
(2) The load variation of the excavator is very severe in terms of time as well as in terms of level as compared with the cars or the like depending on the work, and switching of the mechanically connected parts of the power unit is frequently carried out, thus posing the great problem with respect to the responsiveness or durability of the power unit.

On the other hand, the excavator performs various works such as excavation, horizontal tow, slope tamping (work of leveling and hardening the ground by the bucket), lifting and so on, and the load characteristics are different depending on the respective works.

For example, in the case of the slope tamping, the time variation of load is severe and the work cycle is short. On the other hand, the lifting work is gentle in the time variation of load, and the work cycle is relatively long.

Therefore, it is difficult to select batteries used in the motor driven system.

DE 36 11 455 A1 describes a generic hydraulic excavator which is adapted to be operated outdoors and in closed spaces. For the former case, an engine drives three hydraulic pumps. Further, three additional hydraulic pumps are provided which are operated by an electric motor.

DE 35 01 608 A1 describes a working vehicle with a diesel-hydraulic drive. Here, a main drive is provided with a diesel engine and suitable hydraulic elements for driving the vehicle. Further, an auxiliary drive is provided with a battery driven electric motor connected to suitable hydraulic elements. Each of the two drives may be used alone, and in case there is a high performance requirement of the drive, the drives may also be used together.

Accordingly, the present invention provides an excavator, in the motor driven system, wherein a power unit can be divided and installed, frequent switching of mechanical connected parts of the power unit is not necessary, and the energy efficiency can be enhanced.

Further, the present invention provides an excavator, in the motor driven system, wherein a battery suited to the load characteristic can be used.

### DISCLOSURE OF THE INVENTION

For achieving the aforementioned problem, the present invention has employed the following constitutions.

That is, an excavator in which a lower traveling body is equipped with an upper rotating body thereon, and an excavating attachment is provided on the upper rotating body, comprising an engine as a power source, a generator driven by the engine, and a single electric motor driven by power supplied from the generator, wherein a hydraulic pump is driven by the electric motor, and hydraulic actuators of operating portions of the lower traveling body, the upper rotating body and the excavating attachment are operated by oil from the hydraulic pump.

Further, the present invention has the above-described constitution comprising a plurality of batteries for storing surplus power from the generator and driving the electric motor when necessary, and battery switching means for switching a battery to another one out of the plurality of batteries, the batteries comprising a first battery which is relatively large in capacity and low in responsiveness, and a second battery which is small in capacity and high in responsiveness.

### BRIEF DESCRIPTION OF THE DRAWINGS

Fig. 1 is a schematic side view of the whole excavator according to a first embodiment of the present invention;
Fig. 2 is a block diagram of a driving and control system of the excavator;
Fig. 3 is a view corresponding to Fig. 2 of the excavator according to a second embodiment of the present invention; and
Fig. 4 is a characteristic view of both first and second batteries in the above embodiments.

### BEST MODE FOR CARRYING OUT THE INVENTION

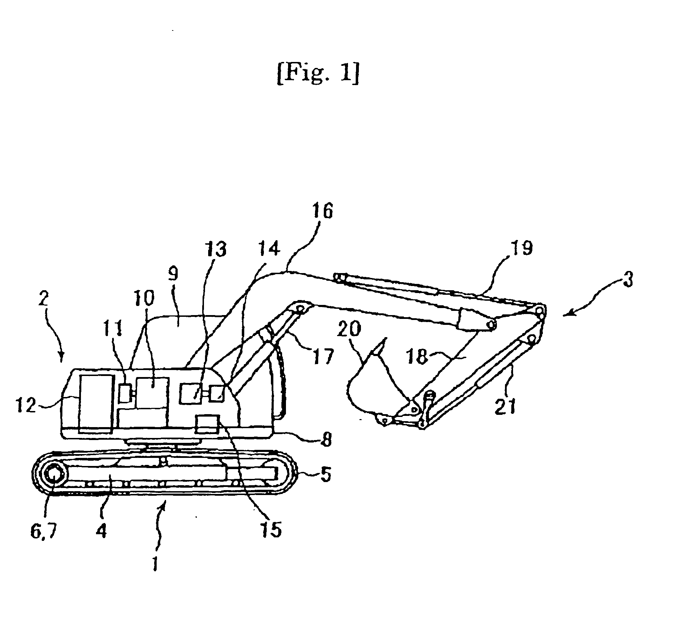

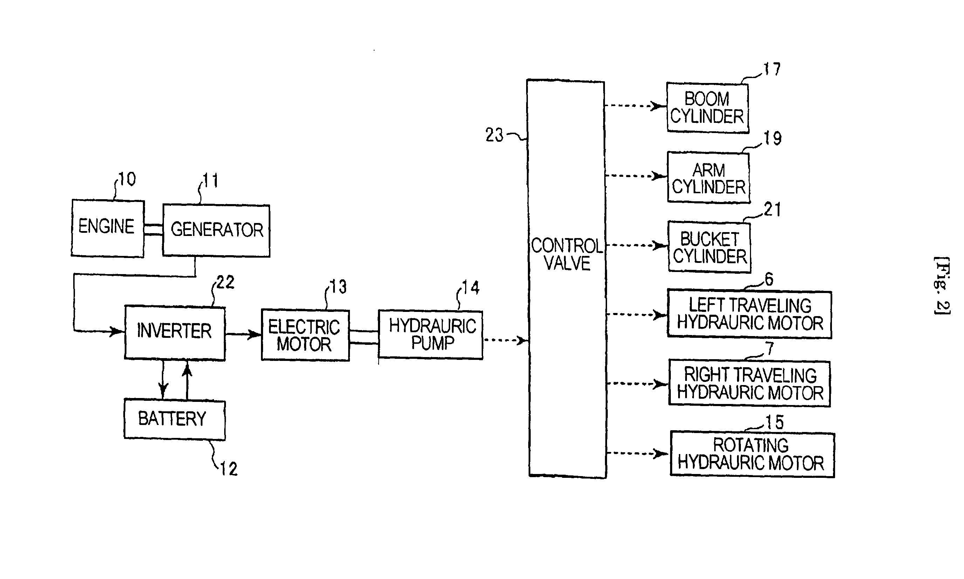

First Embodiment (see Figs. 1 and 2)

Fig. 1 shows the whole excavator according to the embodiment.

In the figure, reference numeral 1 designates a lower traveling body; 2 an upper rotating body; and 3 an excavating attachment mounted on the front portion of the upper rotating body 2.

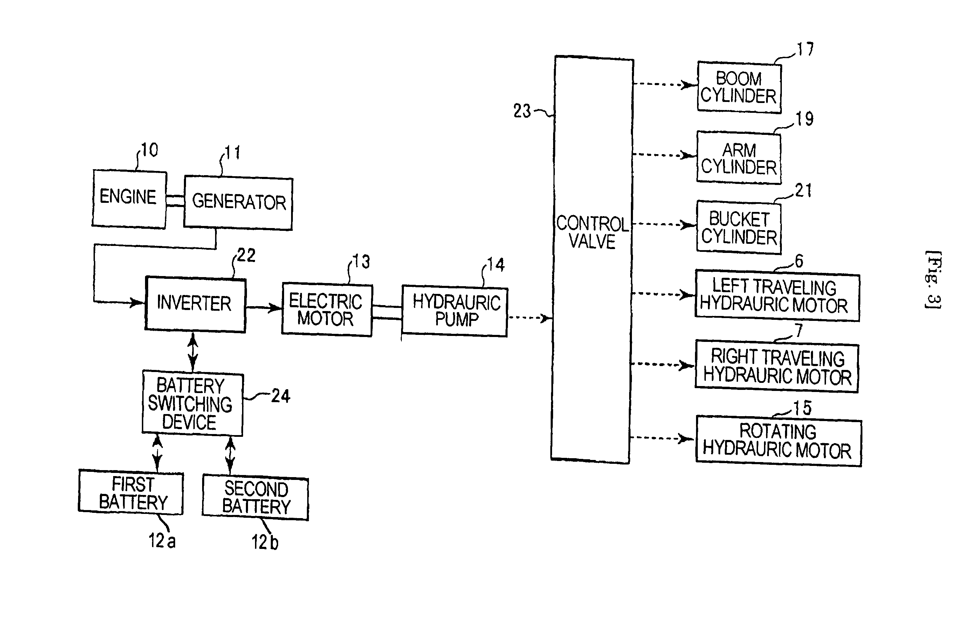

The lower traveling body 1 comprises left and right crawler frames 4 and crawlers (in both of which only one side is shown) 5. Both the crawlers 5 are rotated and driven individually by left and right traveling hydraulic motors (see Fig. 3) 6, 7 for traveling.

The upper rotating body 2 comprises a rotating frame 8 and a cabin 9, and so on. On the rotating frame 8 are installed an engine 10 as a power source, a generator 11 driven by the engine 10, a battery 12, an electric motor 13, a hydraulic pump 14 driven by the electric motor 13, and a rotating hydraulic motor 15.

The excavating attachment 3 comprises a boom 16, a boom cylinder 17 for raising and lowering the boom 16, an arm 18, an arm cylinder 19 for turning the arm 18, a bucket 20, and a bucket cylinder 21 for operating the bucket 20.

Fig.2 shows a block diagram of a driving system and a control system of the excavator.

In the figure, the solid line arrow indicates an electric driving system, and the dotted line arrow indicates a hydraulic driving system.

An inverter 22 is provided between the generator 11, and the electric motor 13 and the battery 12. By the inverter 22,
(1) AC power created by the generator 11 is converted into DC and stored in the battery 12 (charging operation), and
(2) the condensed power of the battery 12 is converted into AC and supplied to the electric motor 13 (discharging operation).

The inverter 22 is provided with switching means though not shown, and the switching of the charging and the discharging operations is carried out by the operation of an operator, or automatically according to the state of load.

Pressure oil of the hydraulic pump 14 driven by the electric motor 13 is supplied, through a control valve 23 (shown here in a lump) provided every hydraulic actuator, to each of the hydraulic actuators (the rotating and traveling hydraulic motors 15, 6, 7, the boom cylinder, the arm cylinder and the bucket cylinder 17, 19, 21), and the operating speed, the torque and the operating direction of the hydraulic actuators can be controlled even by the control valve 23.

The driving and control operations of the excavator including the charging and discharging operations described in the above (1) and (2) will be explained hereinafter.

When the engine 10 is driven, the generator 11 is driven to carry out the generating operation, the electric motor 13 is driven by AC power generated to rotate the pump 14, and the hydraulic actuators are operated as described above whereby the excavating operations (excavating, traveling, and rotating) are carried out.

Fundamentally, the electric motor 13 is driven by power supplied via the inverter 22 from the generator 11, but at the time of heavy load, the short of power is compensated by the condensed power of the battery 12 by the operation of the switching means, and conversely at the time of light load, the surplus power of the generator 11 is stored in the battery 12.

On the other hand, in the case of the light load and of the sufficient battery capacity, the output of the engine 10 is lowered or the engine is stopped, and the electric motor 13 can be driven merely by the battery power.

By the operation as described above, it is possible to smooth the engine load, cut down the noises and exhaust gases, and reduce the fuel costs.

According to the excavator described above, the rotational force is transmitted in the channel of the engine 10 - generator 11 - motor 13 - hydraulic pump 14 as described above, the power unit can be installed by dividing it into a set of the engine 10 and the generator 11, and a set of the electric motor 13 and the hydraulic pump 14. Accordingly, since a large installing space for them at one place is not necessary, this is suited to the excavator of the small rotating radius type.

Further, since the generator 11 and the electric motor 13 can be connected by electric wiring, it is possible to considerably cut down the transmission loss of energy.

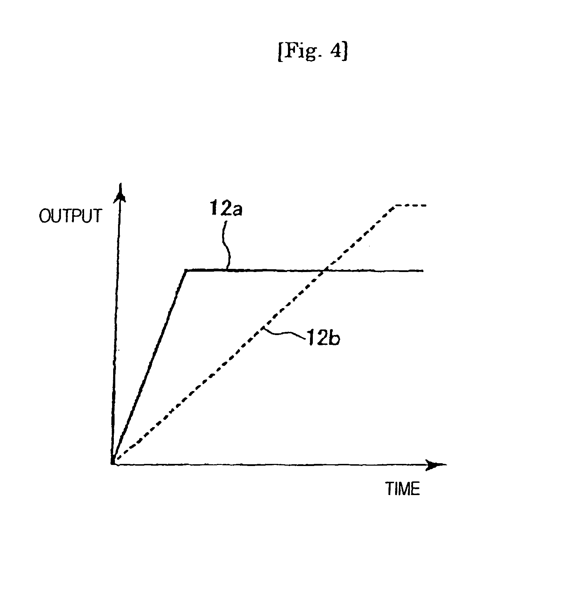

### Second Embodiment (see Figs. 3 and 4)

Only the difference from the first embodiment will be explained.

In the second embodiment, two batteries different in characteristic are used by properly selected according to the load characteristic.

That is, a first and a second batteries 12a, 12b are connected to an inverter 22 through a battery switching device 24.

As the first battery 12a, it is used of, for example, the condenser type which is higher in responsiveness (rising of output relative to time is quick) but is smaller in capacity as compared with the second battery 12b, as shown by the solid line in Fig. 4.

On the other hand, the second battery 12b has the characteristic which is lower in responsiveness and is larger in capacity, as shown by the broken line of Fig. 4, and both the batteries 12a, 12b are selected by the operation of the battery switching device 24 of the switching switch type by an operator.

Accordingly, for example, in case of the work which is severe in time variation of load and is short in work cycle as in the slope tamping work, power supply which is small in output but quick in rising is required, and therefore, the first battery 12a which is excellent in responsiveness is selected; and in case where time variation of load is gentle and work cycle is relatively long as in the lifting work, the second battery 12b in which even if the responsiveness is low, a large output is secured, is selected, whereby the work of good efficiency suited to the load characteristic can be carried out.

Further, since the engine load is smoothed or averaged due to the proper selection of the batteries 12a, 12b, compactness and efficient use of the engine can be achieved, the engine noises and the exhaust gases are cut down, and the fuel costs can be reduced.

Incidentally, while in the above-described embodiment, two kinds of the batteries 12a, 12b have been used properly, it is noted that three or more kinds of batteries may be used properly.

Further, the excavating attachment 3 can be also applied to an excavator having other work tool (for example, an earth discharging plate or a crusher) mounted there on in place of the bucket 20, an excavator provided, as the excavating attachment 3, with that of the loading type which excavates from this side to the opposite side in place of the back hoe type which excavates on this side as shown in Fig. 1, or an excavator which uses, as the lower traveling body, a wheel in place of a crawler.

As described above, the driving force is transmitted in the channel of the engine - generator - electric motor - hydraulic pump. That is, the power unit is divided into a set of engine + generator and a set of electric motor + hydraulic pump, and these sets can be installed separately on the excavator.

Because of this, a large installing space for the engine power unit at one place is not necessary, and this is suitable particularly for an excavator of the small rotating radius type.

Further, since the generator and the electric motor can be connected by electric wiring, cumbersome switching of the mechanical connected parts is not required, and the transmission loss of energy can be cut down considerably.

On the other hand, power generated by the generator at the time of light load is stored in the battery, and the short of power of the generator is compensated for by the condensed power of the battery at the time of heave load or burdened in place of the generator whereby the engine load of the excavator which is severe in load variation is smoothed to enable realization of the cutting down of exhaust gases and reduction of fuel costs.

Further, in the excavator which is different in load characteristic according to the work, there are provided a plurality of batteries different in characteristic, and a proper battery out of a plurality of batteries is switched by switching means whereby the battery matching to the load characteristic can be selected and used.

For example, in the case of work which is gentle in time variation of load and is relatively long in work cycle as in lifting work, the battery which is low in responsiveness and large in capacity, and in the case of work which is severe in time variation of load and is short in work cycle as in the slope tamping work, the battery which is small in capacity but high in responsiveness may be selected respectively.

With this constitution, the condensed power of the battery can be used efficiently, the engine load can be smoothed as compared with the case of a single battery, the engine noises and exhaust gases can be cut down and the fuel costs can be reduced.

### INDUSTRIAL APPLICABILITY

As described above, according to the present invention, the installing space for the power unit can be reduced, and useful effect that is advantageous in the excavator of the small rotating type is obtained.

## Claims

1. An excavator in which a lower traveling body (1) is equipped with an upper rotating body (2) thereon, and an excavating attachment (3) is provided on the upper rotating body (2), comprising
an engine (10) as a power source, a generator (11) driven by the engine (10), and a single electric motor (13) driven by electric power supplied from the generator (11) ,
wherein a hydraulic pump (14) is driven by the electric motor (13), and wherein hydraulic actuators (17, 19, 21, 6, 7, 15) of operating portions of the lower traveling body (1), the upper rotating body (2) and the excavating attachment (3) are operated by oil from the hydraulic pump (14),
**characterized in that**
surplus electric power from the generator is stored in a battery (12) and the electric motor (13) is driven by condensed power of the battery (12) if necessary, and
the battery (12) comprises a plurality of batteries (12a, 12b) different in characteristic, and further comprises battery switching means (24) for switching a battery to another one out of the plurality of batteries.

2. The excavator according to claim 1, wherein the batteries comprise a first battery (12a) which is relatively small in capacity and high in responsiveness, and a second battery (12b) which is relatively large in capacity and low in responsiveness.

## Patentansprüche

1. Bagger, bei dem ein unterer Fortbewegungskörper (1) mit einem auf ihm befindlichen oberen Drehkörper (2) ausgerüstet ist und ein Aushubgerät (3) an dem oberen Drehkörper (2) vorgesehen ist, mit:
einem Verbrennungsmotor (10) als einer Energiequelle, einem Generator (11), der durch den Verbrennungsmotor (10) angetrieben wird, und einem einzigen Elektromotor (13), der durch die von dem Generator (11) zugeführte elektrische Energie angetrieben wird,
wobei eine Hydraulikpumpe (14) durch den Elektromotor (13) angetrieben wird, und wobei hydraulische Aktuatoren (17, 19, 21, 6, 7, 15) von Betriebsabschnitten des unteren Fortbewegungskörpers (1), des oberen Drehkörpers (2) und des Aushubgeräts (3) durch das Öl aus der Hydraulikpumpe (14) betrieben werden,
**dadurch gekennzeichnet, dass**
überschüssige elektrische Energie von dem Generator in einer Batterie (12) gespeichert wird und der Elektromotor (13) erforderlichenfalls durch die gespeicherte Energie der Batterie (12) angetrieben wird, und
die Batterie (12) eine Vielzahl von Batterien (12a, 12b) umfasst, die eine unterschiedliche Charakteristik besitzen, und zudem eine Batterieumschalteinrichtung (24) zum Umschalten von einer Batterie zu einer anderen der Vielzahl von Batterien besitzt.

2. Bagger gemäß Anspruch 1, wobei die Batterien eine erste Batterie (12a), die ein relativ geringes Fassungsvermögen und ein hohes Ansprechvermögen aufweist, und eine zweite Batterie (12b) umfassen, die ein relativ großes Fassungsvermögen und ein niedriges Ansprechvermögen besitzt.

## Revendications

1. Excavatrice dans laquelle un corps inférieur de déplacement (1) est équipé d'un corps supérieur tournant (2), et un équipement destiné à des excavations (3) est prévu sur le corps supérieur tournant (2), comprenant
un moteur thermique (10) en tant que source d'énergie, une génératrice (11) entraînée par le moteur thermique et un moteur électrique unique (13) entraîné par l'énergie électrique fournie à partir de la génératrice (11),
dans laquelle une pompe hydraulique (14) est entraînée par le moteur électrique (13) et dans laquelle des actionneurs hydrauliques (17, 19, 21, 6, 7, 15) de parties de fonctionnement du corps inférieur de déplacement (1), du corps supérieur tournant (2) et de l'équipement destiné aux excavations (3) sont mis en oeuvre par l'huile provenant de la pompe hydraulique (14),
**caractérisée en ce que**
l'énergie électrique en excès provenant de la génératrice est stockée dans une batterie (12) et le moteur électrique (13) est entraîné par l'énergie concentrée de la batterie (12), si nécessaire, et
la batterie (12) comprend une pluralité de batteries (12a, 12b) de caractéristiques différentes, et comprend en outre un moyen de commutation de batteries (24) destiné à réaliser une commutation d'une batterie vers une autre parmi la pluralité de batteries.

2. Excavatrice selon la revendication 1, dans laquelle les batteries comprennent une première batterie (12a) qui présente une capacité relativement faible et une réactivité élevée, et une seconde batterie (12b) qui présente une capacité relativement importante et une faible réactivité.
